# EUROPÄISCHE PATENTSCHRIFT

(11) **EP 3 432 719 B1**
(45) Veröffentlichungstag und Bekanntmachung des Hinweises auf die Patenterteilung: **05.08.2020**
(21) Anmeldenummer: 17716098.3
(22) Anmeldetag: 23.03.2017
(51) Int. Cl.: A21C 5/00, G01G 11/04

(54) **VERFAHREN ZUR MESSUNG DER MASSENVERTEILUNG**
METHOD FOR MEASURING MASS DISTRIBUTION
MÉTHODE POUR MÉSURER LA DISTRIBUTION DE MASSE

(30) Priorität: 24.03.2016 AT 1572016; 24.03.2016 AT 1582016; 17.06.2016 AT 505532016
(43) Veröffentlichungstag der Anmeldung: 30.01.2019
(73) Patentinhaber: König Maschinen Gesellschaft mbH, 8045 Graz (AT)
(72) Erfinder: STAUFER, Wolfgang, 1020 Wien (AT); HEFNER, Josef, 91602 Dürrwangen (AT); THORMÄHLEN, Johann, 25377 Kollmar (DE); SÖNNICHSEN, Dieter, 25712 Burg (DE); STELZER, Hannes, Lannach 8502 (AT); MAIER, Gernot, 8075 Hart bei Graz (AT)
(74) Vertreter: Wildhack & Jellinek
(86) Internationale Anmeldenummer: PCT/AT2017/060074
(87) Internationale Veröffentlichungsnummer: WO 2017/161399

(56) Entgegenhaltungen:
- EP-A1- 2 846 140
- DE-A1- 10 136 980
- US-A- 3 850 023
- US-A- 4 526 244
- US-A1- 2014 034 448

## Beschreibung

Die Erfindung betrifft ein Verfahren zur Messung der Massenverteilung entlang der Breite eines entlang seiner Längsrichtung bewegten Bandes, insbesondere Teigbandes, gemäß dem Oberbegriff des Patentanspruchs 1. Weiters betrifft die Erfindung eine Wiegevorrichtung zur Messung der Massenverteilung entlang der Breite eines entlang seiner Längsrichtung bewegten Bandes, insbesondere eines Teigbandes, gemäß dem Oberbegriff des Patentanspruchs 6.

Im Stand der Technik werden Teigbänder bei Teigbandanlagen mittels Kalibrierwalzen oder anderer Walzen auf eine vorgegebene Teigdicke eingestellt. Besonderes Augenmerk wird darauf gelegt, dass die Kalibrierwalzen oder andere Walzen den gleichen Abstand zueinander haben, um eine homogene Dicke des Teigbandes zu erzielen. Weiters wird im Stand der Technik das Gewicht bereits geschnittener Teigstücke mittels Wiegeeinheiten aufgenommen und untergewichtige Teigstücke aussortiert, da untergewichtige Teigstücke nicht verkauft werden dürfen. Anhand des gemessenen Gewichts der fertigen Teigstücke wird dann die Schneideinrichtung nachträglich nachgestellt, um einen Ausschuss zu minimieren.

Die Dokumente EP 2846140 A1, US 2014034448 A1 und EP 2362194 A1 offenbaren verschiedene Teigwiegevorrichtungen und Verfahren.

Nachteil der bisherigen Wiegevorrichtungen und Verfahren ist es, das Unregelmäßigkeiten in der Dichte und dem Gewicht, beispielsweise ein zu hohes oder zu geringes Gewicht, des Teiges nicht erfassbar sind. So wird immer eine Anzahl an Teigstücken bereits falsch produziert, bevor eine Nachjustierung innerhalb einer Teigbandanlage, Schneideinrichtungen oder Walzanlagen erfolgen kann. Ebenso ist ein zu hohes Gewicht der Teigstücke unerwünscht, da diese zwar verkauft werden können aber die Abweichung eine Verschwendung von Teig und somit eine Kostensteigerung verursacht.

Aufgabe der Erfindung ist es daher, den Ausschuss von Teigbandanlagen zu reduzieren.

Diese Aufgabe wird durch die kennzeichnenden Merkmale der unabhängigen Ansprüche gelöst. Die abhängigen Ansprüche beschreiben optionale Ausführungsformen der Erfindung.

Durch Messung und Erfassung der Massenverteilung des Teigstranges oder Teigbandes können Fehler und Abweichungen der Masse, Dichte und/oder des Gewichts an einer oder mehreren Stellen des Teigstranges ermittelt werden. So können bereits vor einem Schneidvorgang oder einer Weiterverarbeitung des Teiges Unregelmäßigkeiten im Teig ermittelt werden. Weiters kann dann als Gegenmaßnahme bei einem verstellbaren Walzwerk eine beispielsweise einseitige Dickenanpassung oder Schiefstellung der Walzen vorgegeben werden, um einem generellen Dickenunterschied oder Dichteunterschied und damit Gewichtsabweichungen entgegenzuwirken.

Weiters ist es Aufgabe der Erfindung eine Wiegevorrichtung bereit zu stellen mit deren Hilfe der Ausschuss bei der Produktion von Teigstücken und Teigbändern reduziert werden kann.

Diese Aufgabe wird durch die kennzeichnenden Merkmale des Anspruchs 5 gelöst. Dabei ist vorgesehen, die Wiegevorrichtung zumindest zwei Wiegezellen umfasst, wobei die Wiegezellen jeweils zur Bestimmung des Gewichts eines auf dem Transportband aufliegenden Teilstücks eines Bandes, insbesondere eines Teigbands, ausgebildet sind, wobei die Wiegezellen in einem Abstand zueinander bezüglich der Breite des Bandes angeordnet sind, und wobei die Wiegevorrichtung eine Auswerteeinheit umfasst, mit der die Massenverteilung im Band, insbesondere Teigband, unter Berücksichtigung der von den Wiegezellen erfassen Messwerte ermittelbar ist. Unter Teilstück wird im Weiteren ein definierter Teil eines Teigbandes mit definierter Breite und/oder Länge verstanden.

Mit Hilfe der Wiegevorrichtung können die Massenverteilung des Teigstranges oder Teigbandes und eventuell auftretende Fehler und Abweichungen der Masse, Dichte und/oder des Gewichts an einer oder mehreren Stellen des Teigstranges bzw. des Teigbandes ermittelt werden. Hierdurch können Korrekturen bereits vor der Weiterverarbeitung des Teiges vorgenommen werden. So kann z.B. beim Schneiden ein zukünftiges Schnittmaß ermittelt werden, das dem gewünschten Gewicht bestmöglich entspricht.

Besonders vorteilhafte Ausführungsformen des Verfahren und der Wiegevorrichtung werden durch die Merkmale der abhängigen Ansprüche näher definiert:
Die Veränderung der Massenverteilung innerhalb eines Teilstückes und/oder entlang der Breite eines Bandes kann weiter verbessert erfasst werden, wenn die Messwerte der Wiegezellen über einen definierten Zeitbereich aufintegriert werden.

Der Massenstrom des Bandes bzw. Teigbandes kann vorteilhaft ermittelt werden, wenn anhand der Bandgeschwindigkeit des über die Wiegezellen bewegten Bandes und der über die Wiegezellen laufenden Massen ein Massenstrom, insbesondere durch Aufintegration der von den Wiegezellen erhaltenen Messwerte, bestimmt wird.

Zur besseren Ermittlung der Abweichung der Massenverteilung ist vorgesehen, dass die jeweilige Masse der Teilstücke untereinander oder mit einem Sollwert verglichen wird und so Abweichungen des Gewichts der Teilstücke zueinander oder zu einem Sollwert entlang der Breite des Bandes ermittelt werden.

Die Steuerung und Regelung innerhalb einer Teigbandanlage kann vorteilhaft erfolgen, wenn anhand der erfassten Messwerte und/oder Masse der Teilstücke die Schnittbreite einer, insbesondere den Wiegezellen nachfolgenden, Schneideeinheit, insbesondere Längsschneideeinheit, derart vorgegeben wird, sodass die von der Schneideinrichtung entlang der Längsrichtung des Bandes geschnittenen endlosen Teilbänder gleiche Masse je Längeneinheit des Teigbandes aufweisen und/oder die Einstellung von, insbesondere den Wiegezellen nachfolgenden, Walzen, denen das Band, insbesondere Teigband, zugeführt ist, verändert wird.

Vorteilhaft ist vorgesehen, dass anhand der erfassten Messwerte und/oder Masse der Teilstücke und anhand der Bandgeschwindigkeit des über die Wiegezellen bewegten Bandes und der über die Wiegezellen laufenden Massen ein Massenstrom, insbesondere durch Aufintegration der von den Wiegezellen erhaltenen Messwerte, bestimmt wird und dass durch Veränderung der Transportgeschwindigkeit von Transportbändern oder der Umlaufgeschwindigkeit von Kalibrierwalzen, insbesondere innerhalb einer Teigbandanlage, der Massenstrom durch Stauchung des Bandes und/oder Veränderung der Bandgeschwindigkeit nach der Wiegevorrichtung eingestellt oder verändert wird.

Um die Spannung des Bandes bzw. Teigbandes ermitteln zu können und Abweichungen und damit verbunden Unregelmäßigkeiten im Band besser erkennen zu können, ist erfindungsgemäß vorgesehen, dass die Wiegezellen und/oder mit den Wiegezellen verbundene Transportrollen oder Gleitauflagen über die Transportebene des Bandes, insbesondere Teigbandes, hinausragen, wobei das Band, insbesondere Teigband, in einem vorgegebenen Bereich derart über die Wiegezellen und/oder Transportrollen und/oder Gleitauflagen geführt ist, dass das Band, insbesondere Teigband, die Wiegezellen und/oder Transportrollen und/oder Gleitauflagen zumindest teilweise umschlingt und wobei anhand der Veränderung der gemessenen Messwerte der Wiegezellen die Spannung innerhalb des Bandes, insbesondere Teigbandes, ermittelt wird.

Eine zeitgleiche Messung der Masse mehrere Teilstücke erfolgt vorteilhaft, indem die Wiegezellen in Querrichtung, insbesondere im Endbereich, zur Laufrichtung des Transportbandes, insbesondere fluchtend nebeneinander, angeordnet sind.

Der Transport des Bandes kann vorteilhaft trotz Ermittlung der Massenverteilung ungestört weiter erfolgen, wenn die Wiegezellen mit, vorzugsweise den Achsen von, Transportrollen und/oder mit Gleitauflagen derart verbunden sind, dass ein mittels des Transportbandes entlang seiner Längsrichtung bewegtes Band auf die Transportrollen und/oder Gleitauflagen aufgebracht und hinweg bewegbar ist und diese mit einem definierten Teil des Gewichts des Teigbandes beaufschlagt sind. Durch die Verwendung von Transportrollen oder Gleitauflagen, die in einem geringen Abstand zueinander über die gesamte Breite des Teigbandes angeordnet sind, wird das Gewicht des Teigbandes über die gesamte Breite des Teigbandes gleichmäßig verteilt und eine nahezu querkraftfreie Auswertung erlaubt, wodurch keine Veränderung des Teiges bzw. Teigbandes beim Transport über die Wiegevorrichtung erfolgt.

Vorteilhaft ist vorgesehen, dass die Wiegezellen als Scherkraftwiegezelle, Biegestabwiegezelle, Scherstabwiegezelle oder Zugkraftwiegezelle ausgebildet sind.

Eine vorteilhafte Anordnung der Wiegezellen wird erreicht, wenn die Wiegezellen jeweils auf einer Seite an einem Rahmen der Wiegevorrichtung, und insbesondere jeweils die entgegengesetzte Seite der Wiegezelle mit den Transportrollen und/oder Gleitauflagen, derart verbunden sind, dass bei Transport eines Bandes über die Transportrollen das Gewicht eines Teilstückes des Bandes durch die jeweiligen Wiegezellen ermittelt wird.

Eine vorteilhafte Breite der gemessenen Teilstücke, bei gleichzeitiger schmaler Ausführung der Wiegevorrichtung, sieht vor, dass die Wiegevorrichtung sechzehn oder zweiunddreißig oder vierundsechzig, Wiegezellen umfasst, wobei insbesondere die Wiegezellen gleichmäßig entlang der Breite des Transportbandes über einen gesamt Abstand von 800mm verteilt sind. Ebenfalls kann eine derartige Anzahl von Wiegezellen einfach mittels Kombination mehrerer gängiger Bussysteme ausgewertet werden. Ein Vorteil der großen Anzahl von Wiegzellen die in einem geringen Abstand zueinander angeordnet sind ist, dass hierdurch eine hohe Auflösung der Massenverteilung im Teigband erfasst werden kann. Weites kann so bei Auswertung der Messwerte ineinem oder mehrerer Industrie PCs eine Auflösung im Millisekundenbereich erfolgen und so die Genauigkeit erhöht werden.

Die Übergabe eines Bandes an weitere Stationen und der störungsfreie Transport eines Bandes kann verbessert werden, wenn die Wiegevorrichtung zwei Transportbänder aufweist, die in Transportrichtung des Bandes hintereinander angeordnet sind, wobei die Wiegezellen, insbesondere die Transportrollen und/oder Gleitauflagen, derart zwischen den beiden Transportbändern angeordnet sind, dass bei Übergabe eines auf den Transportbändern aufliegenden Bandes von einem Transportband auf das andere Transportband die Wiegezellen, insbesondere die Transportrollen und/oder Gleitauflagen, mit dem Gewicht des Bandes beaufschlagt sind, wobei jede Wiegezelle mit dem Gewicht eines Teilstücks des Bandes beaufschlagt ist.

Eine vorteilhafte Anwendung der Wiegvorrichtung sieht vor, dass eine Teigbandanlage eine erfindungsgemäße Wiegevorrichtung umfasst, wobei vorzugsweise der Wiegevorrichtung eine Schneidanlage, insbesondere eine Längsschneideeinheit, und/oder eine oder mehrere verstellbare Walzen nachgestellt sind, wobei die Teigbandanlage oder die Wiegevorrichtung eine Steuereinheit umfasst, mit der die Schnittbreite der Schneideeinheit, insbesondere Längsschneideeinheit, derart unter Berücksichtigung der ermittelten Gewichtsverteilung entlang der Breite des Bandes vorgegeben wird, sodass die von der Schneideinrichtung entlang der Längsrichtung des Bandes geschnittenen endlosen Teilbänder gleiche Masse je Längeneinheit des Teilbandes aufweisen und/oder
dass die Einstellung der Walzen durch die Steuereinheit unter Berücksichtigung der ermittelten Gewichtsverteilung entlang der Breite des Bandes veränderbar ist und/oder dass der Wiegevorrichtung zumindest ein Transportband oder zumindest eine Kalibrierwalze vor- und/oder nachgestellt ist, wobei anhand des durch die Wiegevorrichtung ermittelten Massenstroms die Transportgeschwindigkeit des Transportbands oder die Umlaufgeschwindigkeit der Kalibrierwalze der Massenstrom durch Stauchung des Teigbandes und/oder Veränderung der Bandgeschwindigkeit einstellbar oder veränderbar ist.
Durch die Regelung von mehreren Einheiten innerhalb der Teigbandanlage zueinander können Korrekturschnitte verhindert werden und der Ausschuss von Teig reduziert sowie eine gewichtsgenaue Produktion von Teiglingen, Teigbändern und Teigstücken erzielt werden.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

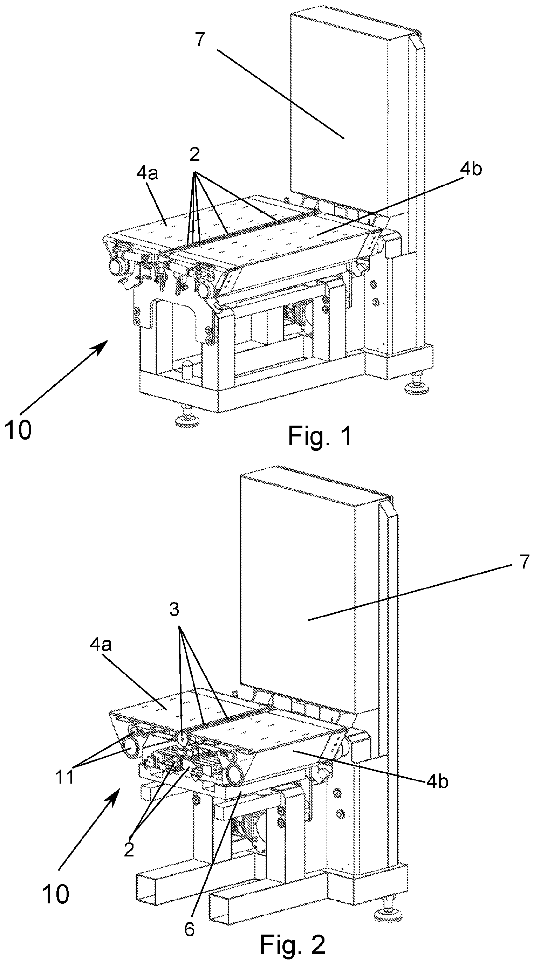

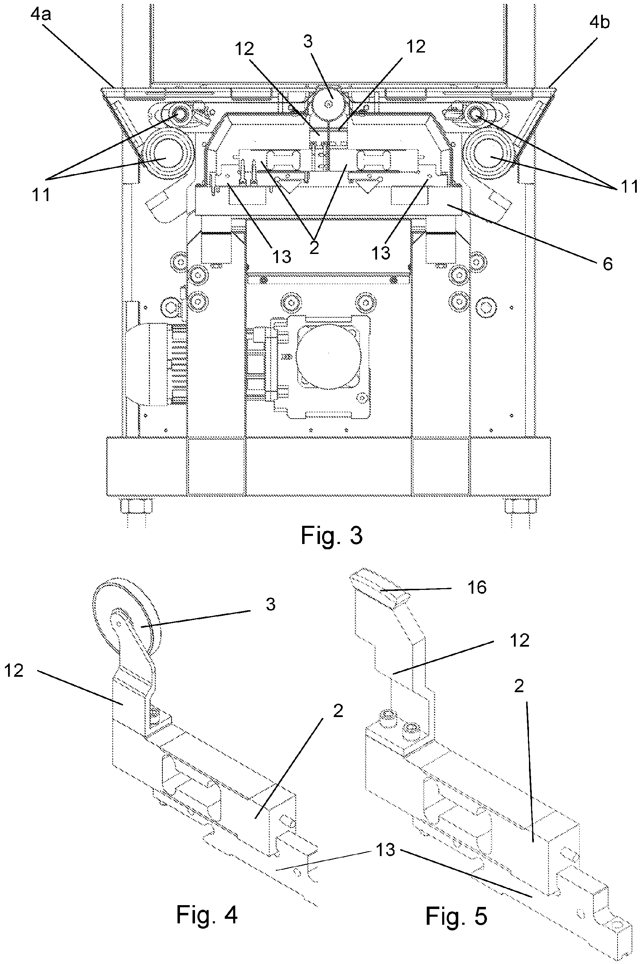

Fig. 1 zeigt eine isometrische Schnittansicht der Wiegevorrichtung. Fig. 2 zeigt eine Schnittansicht einer weiteren Ausführungsform der Wiegevorrichtung. Fig. 3 zeigt eine Seitenansicht der Wiegevorrichtung gemäß Fig. 2 im Schnitt. Fig. 4 zeigt eine Detailansicht einer Ausführungsform der Wiegezelle. Fig. 5 zeigt eine Alternative Ausführungsform der Wiegezelle mit Gleitschuh.

In Fig. 1 ist eine Ausführungsform der erfindungsgemäßen Wiegevorrichtung 10 in einer isometrischen Ansicht dargestellt. Die Wiegevorrichtung 10 umfasst zwei Transportbänder 4a, 4b, die ein auf diesen aufgelegtes Teigband, beispielsweise innerhalb einer Teigbandanlage, weiterbefördern. Die Transportbänder 4a, 4b weisen die gleiche Umlaufrichtung auf und transportieren ein auf den Transportbändern 4a, 4b aufgelegtes Teigband entlang der Längsrichtung des Teigbandes. Weiters weist die Wiegvorrichtung 10 vierundsechzig Wiegezellen 2 auf, die in einem Abstand zueinander bezüglich der Breite der Förderbänder 4a, 4b bzw. des Teigbandes angeordnet sind. Die Wiegezellen 2 sind gleichmäßig über die Breite bzw. lotrecht bzw. quer zur Laufrichtung der Förderbänder 4a, 4b verteilt und sind fluchtend nebeneinander angeordnet. Die Wiegezellen 2 ragen über die Ebene der beiden Transportbänder 4a, 4b hinaus und werden jeweils mit dem Gewicht einzelner Teilabschnitte des Teigbandes beaufschlagt. Die Wiegezellen 2 messen dabei das Gewicht des jeweiligen Teilstücks des Teigbandes und leiten die erfassten Messwerte an eine Auswerteeinheit 7 weiter. Jede Wiegezelle 2 misst somit das Gewicht eines definierten Teilstückes des Teigbands. Durch die Auswerteeinheit 7 wird dann die Masse der Teilstücke oder die Veränderung der Masse der Teilstücke unter Berücksichtigung der durch die Wiegezellen 2 erfassten Messwerte bestimmt und beispielsweise die Massen der Teilstücke miteinander verglichen und/oder ein Modell des Teigbandes anhand Massenverteilung über die Breite des Teigbandes erstellt.

In **Fig. 2** ist eine weitere Ausführungsform der erfindungsgemäßen Wiegevorrichtung 10 in einer Schnittansicht dargestellt. Der Schnitt verläuft senkrecht durch die Transportebene der Transportbänder 4a, 4b und in Längsrichtung eines auf die Transportbänder 4a, 4b aufgelegten und durch die Transportbänder 4a, 4b in dessen Längsrichtung bewegten Teigbandes. Die Wiegvorrichtung 10 weist zwei Transportbänder 4a, 4b auf, die jeweils über Umlenkrollen 11, in dieser Ansicht im Uhrzeigersinn, geschlossen umlaufend geführt werden. Die Wiegevorrichtung 10 umfasst weiters eine Anzahl von Wiegezellen 2.

**Fig. 4** zeigt eine Detailansicht einer in der Ausführungsform der **Fig. 2** und **Fig. 3** verwendeten Wiegezelle 2. Die Wiegezelle 2 ist als Biegestabwiegezelle ausgebildet und weist jeweils eine längliche quaderförmige Form auf. Die Wiegezelle 2 ist an einer Seite über einen Rollenhalter 12 mit den Achsen einer Transportrolle 3 verbunden. An dem den Rollenhalter 12 gegenüberliegenden Ende der Wiegezelle 2 ist die Wiegezelle 2 mit einem Zwischenstück 13 verschraubt.

**Fig. 3** zeigt eine Seitenansicht der in **Fig. 2** dargestellten Ausführungsform der erfindungsgemäßen Wiegevorrichtung 10 im Schnitt mit der gleichen Schnittführung wie bei **Fig. 2**. Die Wiegevorrichtung 10 umfasst zwei Transportbänder 4a, 4b, die in Transportrichtung des Teigbandes hintereinander angeordnet sind. Die Wiegezellen 2 bzw. die Transportrollen 3 sind in Laufrichtung der beiden Transportbänder 4a, 4b zwischen diesen angeordnet. Bei Übergabe eines auf den Transportbändern 4a, 4b aufliegenden Teigbandes von dem Transportband 4a auf das andere Transportband 4b werden die Transportrollen 3 und damit die Wiegezellen 2 mit dem Gewicht des Teigbandes beaufschlagt. Die jeweilige Wiegezelle 2 wird somit mit dem Gewicht eines Teilstücks des Teigbandes beaufschlagt. Bei gleichmäßigem Abstand der Transportrollen 3 bzw. der Wiegzellen 2 untereinander wird jede Wiegezelle 2 mit dem Gewicht eines gleichgroßen Teilstückes des Teigbandes beaufschlagt. Die Breite der Teilstücke entspricht dabei jeweils dem Abstand der Wiegezellen 2 bzw. Transportrollen 3 zueinander. Ist das Teigband beispielsweise 800mm breit und eine Anzahl von sechzig Transportrollen 3 entlang der Breite der Transportbänder 4a, 4b gleichmäßig verteilt, so ist jedes auf den Wiegezellen 2 lastende Teilstück ca. 13mm breit, wenn die Breite der Transportbänder 4a, 4b der Breite des Teigbandes entspricht. Um eine andere Breite der jeweils vermessenen Teilstücke zu erzielen, können die Transportrollen 3 bzw. die Wiegzellen 2 auch in einem andren Abstand entsprechend den Anforderungen angeordnet sein. Mit der geeigneten Auswahl des Abstandes zwischen den Wiegezellen 2 wird stets das Gewicht von Teilstücken mit definierte Breite für die Auswertung zur Verfügung gestellt.

Wie in **Fig. 2** und **Fig. 3** dargestellt sind die Wiegezellen 2 mit dem Zwischenstück 13 auf einem Rahmen 6 der Vorrichtung 10 verschraubt. Die Transportrollen 3 ragen über die Ebene der Transportbänder 4a, 4b hinaus. Durch ein mittels der Transportbänder 4a, 4b entlang dessen Längsrichtung bewegtes Teigband werden die Transportrollen 3 jeweils mit dem Gewicht eines Teilstückes beaufschlagt, während das Teigband durch die Transportbänder 4a, 4b über die Transportrollen 3 bewegt wird. Durch das auf die Transportrollen 3 und damit auf die Wiegezellen 2 einwirkende Gewicht der Teilstücke werden die Transportrollen 3 zur Fläche des Teigbandes beaufschlagt. Diese Gewichtsbeaufschlagung wird dann durch die Wiegezellen 2 erfasst, beispielsweise indem eine minimale Verschiebung des mit der Transportrolle 3 verbundenen Endes der jeweiligen Wiegezelle 2 gemessen wird. Jeweils benachbarte Wiegezellen 2 sind an dem Rahmen 6 der Vorrichtung 10 gedreht angeordnet, sodass die mit den jeweiligen Wiegezellen 2 verbundenen Transportrollen 3 fluchtend nebeneinander angeordnet sind, jedoch die Enden mit denen die Wiegezellen 2 mit den Zwischentücken 13 verbunden sind, jeweils versetzt bzw. um 180° gedreht bzw. voneinander weg weisen. Dies bewirkt eine kompakte Bauweise und es können engere Abstände der Transportrollen 3 verwirklicht bzw. kleinere Teilstücke eines auf den Transportbändern 4a, 4b aufgelegten Teigbandes gemessen werden und die Genauigkeit bzw. Auflösung der gemessenen Massenverteilung erhöht werden.

Alternativ können auch zweiunddreißig, sechzehn oder eine beliebige andere Anzahl von Wiegezellen 2 vorgesehen sein. Die Wiegezellen 2 können alternativ beispielsweise auch als Scherkraftwiegezellen, Scherstabwiegezellen oder Zugkraftwiegezellen oder als andere aus dem Stand der Technik bekannte Wiegezellen oder Kraftaufnehmer ausgebildet sein.

Die Wiegezellen 2 bzw. die Transportrollen 3 können, wie in den **Fig. 2** und **Fig. 3** dargestellt, gleichmäßig über die Breite der Transportbänder 4a, 4b verteilt sein oder auch unterschiedlichen Abstand zueinander aufweisen. Alternativ kann auch nur ein Transportband 4 oder auch kein Transportband vorgesehen sein, wenn die Wiegvorrichtung 10 beispielsweise zwischen zwei Bearbeitungsstationen mit eigenen Transportbändern in deren Übergabebereich angeordnet ist.

Alternativ kann die Wiegezelle 2 auch wie in Fig. 5 dargestellt mit einer starren bzw. bewegliche Gleitauflage 16 oder anderen geeigneten Weitergabeelementen über ein Zwischenstück oder auch direkt verbunden sein.

Im folgenden wird eine erfindungsgemäßes vorteilhaftes Verfahren zur Erfassung des Gewichtes der Teilstücke bzw. der Massenverteilung entlang der Breite eines Teigbandes erklärt:
Um die Massenverteilung entlang der Breite eines Teigbandes zu erfassen, wird das Teigband erfindungsgemäß entlang seiner Längsrichtung, also entlang der endlosen Länge des Teigbandes bewegt. Das Teigband hat eine durch Walzen oder andere Formvorrichtungen aufgeprägte vorgegebener Sollbreite. Mittels zumindest zweier Wiegezellen 2 mit unterschiedlicher Anordnung über die Breite des Teigbandes, wie beispielsweise bei den Ausführungsformen der **Fig. 1 bis Fig. 3** dargestellt, kann das Gewicht von mehreren, der Anzahl der Wiegzellen 2 entsprechenden, definierten Teilstücken des Bandes mit definierter Breite und Länge erfasst werden.

Die Masse der Teilstücke des Teigbandes kann dann unter Berücksichtigung des Abstandes der Wiegezellen 2 zueinander, der Lage der Wiegezellen 2 zum Teigband, der Bandgeschwindigkeit und der durch die Wiegezellen 2 erfassten Messwerte des Gewichts der Teilstücke über einen definierten Zeitabschnitt ermittelt wird.

So wird beispielsweise die Massenverteilung eines Teigbands mit einer Breite von 600mm mittels sechzig Wiegezellen 2 erfasst, indem die durch die Wiegzellen 2 erfassten Messwerte untereinander für den selben Zeitpunkt verglichen werden. Jedes durch die Wiegezellen 2 vermessene Teilstück des Teigbandes ist somit 10mm breit. Durch Abbildung des Gewichts der Teilstücke entsprechend ihrer Anordnung über die Breite des Teigbandes bzw. Vergleich der einzelnen erfassten Massenwerte der Wiegzellen 2, kann die Massenverteilung durch eine Auswerteeinheit 7 entlang der Breite des Teigbandes erfasst werden. Die erfasste Masse der Teilstücke kann dann mit einem Sollwert oder mit der Masse der anderen Teilstücke verglichen werden und so Unregelmäßigkeiten in der Massenverteilung entlang der Breite des gesamten Teigbandes erfasst werden.

Weiters können beispielsweise die Messwerte der Wiegezellen 2 über einen definierten Zeitbereich aufintegriert werden und so Massenveränderungen entlang der Breite und/oder der Länge des Teigbandes und oder Abweichungen im Herstellungsprozess des Teigbandes ermittelt werden.

Weiters kann vorteilhaft der Massenstrom eines über die Wiegzellen 2 transportierten Teigbandes oder mehrerer parallel jeweils über einen Teil der Wiegzellen 2 geführten Teigbänder oder Teigstränge bestimmt werden. Hierzu wird mittels der Bandgeschwindigkeit des über die Wiegezellen 2 bewegten Teigbandes und der über die Wiegezellen 2 laufenden Massen ein Massenstrom durch Aufintegration der von den Wiegezellen 2 erhaltenen Messwerte errechnet.

Eine Anwendung des erfindungsgemäßen Verfahrens und der erfindungsgemäßen Vorrichtung sieht vor, dass diese innerhalb einer Teigbandanlage angeordnet bzw. verwendet werden. So kann der Wiegvorrichtung beispielsweise eine Schneideeinheit, z.B. eine Längsschneideeinheit, innerhalb der Teigbandanlage nachfolgen, die das Teigband in Teilbänder mit gleicher Masse je Meter Länge oder Stücken mit gleicher Masse schneidet. Die Schnittbreite der Schneideeinheit kann dann durch die ermittelte Massenverteilung des Bandes vorgegeben werden, sodass die von der Schneideinrichtung entlang der Längsrichtung des Bandes geschnittenen endlosen Teilbänder gleiche Masse je Zentimeter Länge des Teilbandes aufweisen. Über die Transportgeschwindigkeit und die zeitlich erfasste Massenverteilung des Teigbandes sowie die Anordnung der Scheideinrichtung relativ zu der Wiegevorrichtung 10 können zeitabhängig immer Teigstücke oder Teilbänder mit gleicher Masse durch Verstellung der Schneideinrichtung erzeugt werden. Hierdurch wird bereits vorgreifend auf die Schnitte der Schneideinrichtung eingewirkt und stets ausschussfrei und gewichtsgenau produziert. Beispielsweise kann für den Fall, dass ein zu schneidender Teigbereich zu schwer wird, die Schnittbreite für diesen Bereich reduziert und damit das Gewicht angepasst werden. Da dies Auswirkungen auf die Schnittbreite nebenstehender Teilstücke haben kann, kann die Schnittbreite der weiteren Teilstücke vorteilhaft entsprechend der Verstellung der Breite eines Teilstückes verstellt werden. Als weitere Maßnahme kann alternativ auch der Längsschnitt des Teigbandes bzw., der Teilbänder angepasst werden.

Eine weitere Anwendung sieht vor, dass die Wiegevorrichtung 10 innerhalb einer Teigbandanlage eine oder mehrere verstellbare Walzen nachgestellt sind. Die Einstellung der Walzen ist dabei durch eine Steuereinheit unter Berücksichtigung der ermittelten Gewichtsverteilung entlang der Breite des Bandes veränderbar.

Durch Aufnahme der Massenverteilung des Teigbandes können beispielsweise kontinuierliche Fehler an einer oder mehreren Stellen des Teigstranges festgestellt werden. Als Gegenmaßnahme kann in einer Teigbandanlage mit verstellbaren Walzwerk eine einseitige Dickenanpassung oder Schiefstellung der Walzen vorgegeben werden, um einem Dickenunterschied oder der Abweichung der Massenverteilung des Teigbandes oder einzelner Teilstücke des Teigbandes entgegenzuwirken. Wenn z.B. tendenziell die rechte Teigbandseite mehr Gewicht hat als die linke Teigbandseite, so kann dies über eine gewollte Schiefstellung der verstellbaren Kalibrierwalze oder anderer Walzen korrigiert werden. Ebenfalls kann alternativ beim Einsatz mehrerer verstellbarer Kalibrierwalzwerke hintereinander die Korrektur stufenweise verfeinert ausgeführt werden und damit das Teigband noch gleichmäßiger geformt werden.

Je nach Anordnung der Wiegevorrichtung 10 kann bei Platzierung vor einem Walzwerk auch bei abweichender Massenverteilung eine Vorkorrektur im Walzwerk über Drehzahlanpassung oder Spaltanpassung erfolgen und somit können die Abweichungen noch innerhalb der Produktion z.B. vor dem Schnitt oder der Weiterverarbeitung korrigiert werden. Weiters kann vorteilhaft der Teigdruck im Walzenbereich an einer oder auch mehreren Stellen gemessen werden und das Walzwerk oder die Teigbandanlage entsprechende Messaufnehmer umfassen und der Teigdruck in der Regelung berücksichtigt werden.

Weiters kann bei Verwendung der Wiegevorrichtung 10 innerhalb einer Teigbandanlage die Wiegevorrichtung 10 nach einer Längsschneideeinheit angeordnet sein und je nach Belastung der Wiegezellen 2 erkannt werden, wie viele Teigstücke bzw. Teigstränge geschnitten wurden und so eine automatische Reihenerkennung realisiert werden.

Wie in den beschriebenen Ausführungsformen gezeigt, kann ein einzelnes Teigband, das sich entlang der gesamten Breite der Wiegevorrichtung 10 erstreckt und alle Wiegezellen 2 oder eine definierte Anzahl der Wiegezellen 2 beaufschlagt, vermessen werden und die Massenverteilung bzw. der Massenstrom dieses Teigbandes erfasst werden. Alternativ können aber auch mehrerer Teigbänder oder Teigstränge parallel über die Wiegezellen 2 bzw. jeweils über einen Teil der Wiegezellen 2 geführten werden und so Abweichungen zwischen Teigsträngen oder der Massenstrom der Teigbänder bzw. Teigstränge erfasst werden.

Alternativ oder zusätzlich zu den genannten Verwendungen kann die Wiegevorrichtung 10 auch zur Bestimmung der Schnittlänge innerhalb der Länge des Teigbandes verwendet werden. So kann beispielsweise in einer Querschneideeinheit mit verstellbaren Messern oder bei einem Schneidroboter die Schnittlänge anhand der Massenverteilung verändert werden.

Weiters ist vorgesehen, dass mit der Bandgeschwindigkeit des über die Wiegezellen 2 bewegten Teigbandes und der über die Wiegezellen 2 laufenden Massen der Massenstrom des Teiges durch die Wiegevorrichtung bzw. innerhalb der Teigbandanlage durch Aufintegration der von den Wiegezellen 2 erhaltenen Messwerte bestimmt wird. Je nach Massenstrom kann dann die Transportgeschwindigkeit der Transportbändern 4 oder die Umlaufgeschwindigkeit von Kalibrierwalzen verstellt werden und so ein gezielter Massenstrom nach der Wiegevorrichtung 10 erzeugt werden. Weiters kann die Massenverteilung entlang der Breite des Teigbandes durch Stauchung des Teigbandes und/oder Veränderung der Bandgeschwindigkeit nach der Wiegevorrichtung 10 eingestellt oder verändert werden.

Weiters können analog zu endlosen Teilstücken auch einzelne Teigstücke mit definierter Breite und Länge der Vorrichtung zugeführt werden und die Massenverteilung oder die Masse dieser Teigstücke ermittelt werden.

Weiters ist es möglich, die Bandwiegvorrichtung als Basis für die Einstellung und Regelung der Walzen zu verwenden. Die erfindungsgemäße Wiegevorrichtung 10 sieht vor, dass die Wiegzellen 2 und/oder die mit den Wiegezellen 2 verbundenen Transportrollen 3 oder die Gleitauflagen 16 über die Transportebene des Teigbandes, z.B. über die gedachte Ebene der beiden Transportbänder 4a, 4b, hinausragen. Das Teigband wird dann über einen vorgegebenen Bereich derart über die Wiegezellen 2 und/oder Transportrollen 3 und/oder Gleitauflagen 16 geführt, dass das Teigband die Wiegzellen 2 und/oder die Transportrollen 3 und/oder die Gleitauflagen 16 zumindest teilweise umschlingt. Anhand der Veränderung der gemessenen Messwerte der Wiegezellen 2 kann dann die Spannung des Teigbandes ermittelt werden. So kann beispielsweise das Teigband über ein Viertel des Umfangs der Transportrollen 3 geführt werden und anhand der Veränderung des Durchhangs zwischen Transportrolle 3 und dem nächsten Transportband 4 und der damit verbundenen Änderung der durch die Wiegezellen 2 gemessenen Masse durch Vergleich mit einem Referenzmodell die Spannung des Teigbandes erfasst werden.

Alternativ können anstelle des das Teigbands auch andere Bänder, wie Stoff-, Papier- oder Stahlbänder der Vorrichtung zugeführt werden und die dargestellte Wiegevorrichtung 10 an die Anforderungen dieser Bänder angepasst werden. Ebenfalls kann das erfindungsgemäße Verfahren auch für derartige Bänder eingesetzt werden.

Zur Kalibrierung der Wiegzellen 2 bzw. der Wiegevorrichtung 10 kann ein definiertes Kalibierband über diese befördert werden und die daraus resultierten Messwerte zur Einstellung der Wiegezellen 2 und der Auswerteeinheit 7 herangezogen werden.

## Patentansprüche

1. Verfahren zur Messung der Massenverteilung entlang der Breite eines entlang seiner Längsrichtung bewegten Bandes, insbesondere Teigbandes, mit vorgegebener Sollbreite, wobei mittels zumindest zweier Wiegezellen (2), die in einem Abstand zueinander bezüglich der Breite des Bandes angeordnet sind, das Gewicht von zumindest einem Teigstrang oder Teigstück mit durch die Abstände der Wiegezellen (2) definierter Breite erfasst wird,
- wobei die Masse der Teilstücke des Bandes unter Berücksichtigung des Abstandes der Wiegezellen (2) zueinander, der Lage der Wiegezellen (2) längs der Breite des Bandes, der Bandgeschwindigkeit und der durch die Wiegezellen (2) erfassten Messwerte des Gewichts der Teilstücke, insbesondere über einen definierten Zeitabschnitt, ermittelt wird, **dadurch gekennzeichnet, dass** die Wiegezellen (2) und/oder mit den Wiegezellen (2) verbundene Transportrollen (3) oder Gleitauflagen (16) über die Transportebene des Bandes, insbesondere Teigbandes, hinausragen, wobei das Band, insbesondere Teigband, in einem vorgegebenen Bereich derart über die Wiegezellen (2) und/oder Transportrollen (3) und/oder Gleitauflagen (16) geführt ist, dass das Band, insbesondere Teigband, die Wiegezellen (2) und/oder Transportrollen (3) und/oder Gleitauflagen (16) zumindest teilweise umschlingt und wobei anhand der Veränderung der gemessenen Messwerte der Wiegezellen (2) die Spannung innerhalb des Bandes, insbesondere Teigbandes, ermittelt wird.

2. Verfahren nach Anspruch 1, **dadurch gekennzeichnet, dass** die Messwerte der Wiegezellen (2) über einen definierten Zeitbereich aufintegriert werden und/oder dass anhand der Bandgeschwindigkeit des über die Wiegezellen (2) bewegten Bandes und der über die Wiegezellen (2) laufenden Massen ein Massenstrom, insbesondere durch Aufintegration der von den Wiegezellen erhaltenen Messwerte, bestimmt wird.

3. Verfahren nach Anspruch 1 oder 2, **dadurch gekennzeichnet, dass** die jeweilige gemessene Masse der Teilstücke untereinander oder mit einem Sollwert verglichen wird und so Abweichungen des Gewichts der Teilstücke zueinander oder zu einem Sollwert entlang der Breite des Bandes ermittelt werden.

4. Verfahren nach einem der Ansprüche 1 bis 3, **dadurch gekennzeichnet, dass** anhand der erfassten Messwerte und/oder Masse der Teilstücke
- die Schnittbreite einer, insbesondere den Wiegezellen (2) nachfolgenden, Schneideeinheit, insbesondere Längsschneideeinheit, derart vorgegeben wird, sodass die von der Schneideinrichtung entlang der Längsrichtung des Bandes geschnittenen endlosen Teilbänder gleiche Masse je Längeneinheit des Teigbandes aufweisen und/oder
- die Einstellung von, insbesondere den Wiegezellen (2) nachfolgenden, Walzen, denen das Band, insbesondere Teigband, zugeführt ist, verändert wird.

5. Verfahren nach einem der vorangehenden Ansprüche, **dadurch gekennzeichnet, dass** anhand der erfassten Messwerte und/oder Masse der Teilstücke und anhand der Bandgeschwindigkeit des über die Wiegezellen (2) bewegten Bandes und der über die Wiegezellen (2) laufenden Massen ein Massenstrom, insbesondere durch Aufintegration der von den Wiegezellen (2) erhaltenen Messwerte, bestimmt wird und dass durch Veränderung der Transportgeschwindigkeit von Transportbändern (4) oder der Umlaufgeschwindigkeit von Kalibrierwalzen, insbesondere innerhalb einer Teigbandanlage, der Massenstrom durch Stauchung des Bandes und/oder Veränderung der Bandgeschwindigkeit nach der Wiegevorrichtung (10) eingestellt oder verändert wird.

6. Wiegevorrichtung (10) zur Messung der Massenverteilung entlang der Breite eines in seiner Längsrichtung bewegten Bandes, insbesondere Teigbandes, mit vorgegebener Sollbreite, insbesondere nach einem Verfahren der Ansprüche 1 bis 5, umfassend zumindest ein Transportband (4) zum Transport des Bandes, insbesondere Teigbandes, entlang dessen Längsrichtung, wobei die Wiegevorrichtung (10) zumindest zwei Wiegezellen (2) umfasst,
- wobei die Wiegezellen (2) jeweils zur Bestimmung des Gewichts eines auf dem Transportband (4) aufliegenden Teilstücks eines Bandes, insbesondere eines Teigbands, ausgebildet sind, wobei die Wiegezellen (2) in einem Abstand zueinander bezüglich der Breite des Bandes angeordnet sind, und
- wobei die Wiegevorrichtung (10) eine Auswerteeinheit (7) umfasst, mit der die Massenverteilung im Band, insbesondere Teigband, unter Berücksichtigung der von den Wiegezellen (2) erfassen Messwerte ermittelbar ist, **dadurch gekennzeichnet, dass** die Wiegezellen (2) mit, vorzugsweise den Achsen von, Transportrollen (3) und/oder mit Gleitauflagen (16) derart verbunden sind, dass ein mittels des Transportbandes (4) entlang seiner Längsrichtung bewegtes Band auf die Transportrollen (3) und/oder Gleitauflagen (16) aufgebracht und hinweg bewegbar ist und diese mit einem definierten Teil des Gewichts des Teigbandes beaufschlagt sind,
- und dass die Wiegevorrichtung (10) zwei Transportbänder (4a, 4b) umfasst, die in Transportrichtung des Bandes hintereinander angeordnet sind, wobei die Transportrollen (3) und/oder Gleitauflagen (16) derart zwischen den beiden Transportbändern (4a, 4b) angeordnet sind, dass bei Übergabe eines auf den Transportbändern (4a, 4b) aufliegenden Bandes von einem Transportband (4a) auf das andere Transportband (4b) die Transportrollen (3) und/oder Gleitauflagen (16) mit dem Gewicht des Bandes beaufschlagt sind, wobei jede Wiegezelle (2) mit dem Gewicht eines Teilstücks des Bandes beaufschlagt ist.

7. Wiegevorrichtung (10) nach Anspruch 6, **dadurch gekennzeichnet, dass** die Wiegezellen (2) in Querrichtung, insbesondere im Endbereich, zur Laufrichtung des Transportbandes (4), insbesondere fluchtend nebeneinander, angeordnet sind.

8. Wiegevorrichtung (10) nach einem der Ansprüche 6 und 7, **dadurch gekennzeichnet, dass** die Wiegezellen (2) als Scherkraftwiegezelle, Biegestabwiegezelle, Scherstabwiegezelle oder Zugkraftwiegezelle ausgebildet sind.

9. Wiegevorrichtung (10) nach einem der Ansprüche 6 bis 8, **dadurch gekennzeichnet, dass** die Wiegezellen (2) jeweils auf einer Seite an einem Rahmen (6) der Wiegevorrichtung (10), und insbesondere jeweils die entgegengesetzte Seite der Wiegezelle (2) mit den Transportrollen (3) und/oder Gleitauflagen (16), derart verbunden sind, dass bei Transport eines Bandes über die Transportrollen (3) und/oder Gleitauflagen (16) das Gewicht eines Teilstückes des Bandes durch die jeweiligen Wiegezellen (2) ermittelt wird.

10. Wiegevorrichtung (10) nach einem der Ansprüche 6 bis 9, **dadurch gekennzeichnet, dass** die Wiegevorrichtung (10) sechzehn oder zweiunddreißig oder vierundsechzig, Wiegezellen (2) umfasst,
- wobei insbesondere die Wiegezellen (2) gleichmäßig entlang der Breite des Transportbandes (4), insbesondere über einen Gesamtabstand von 800mm, verteilt sind.

11. Teigbandanlage umfassend eine Wiegevorrichtung (10) nach einem der Ansprüche 6 bis 10, wobei vorzugsweise der Wiegevorrichtung (10) eine Schneidanlage, insbesondere eine Längsschneideeinheit, und/oder eine oder mehrere verstellbare Walzen nachgestellt sind,
- wobei die Teigbandanlage oder die Wiegevorrichtung (10) eine Steuereinheit umfasst, mit der die Schnittbreite der Schneideeinheit, insbesondere Längsschneideeinheit, derart unter Berücksichtigung der ermittelten Gewichtsverteilung entlang der Breite des Bandes vorgegeben wird, sodass die von der Schneideinrichtung entlang der Längsrichtung des Bandes geschnittenen endlosen Teilbänder gleiche Masse je Längeneinheit des Teilbandes aufweisen und/oder
- dass die Einstellung der Walzen durch die Steuereinheit unter Berücksichtigung der ermittelten Gewichtsverteilung entlang der Breite des Bandes veränderbar ist und/oder
- dass der Wiegevorrichtung (10) zumindest ein Transportband oder zumindest eine Kalibrierwalze vor - und/oder nachgestellt ist, wobei anhand des durch die Wiegevorrichtung (10) ermittelten Massenstroms die Transportgeschwindigkeit des Transportbands (4) oder die Umlaufgeschwindigkeit der Kalibrierwalze der Massenstrom durch Stauchung des Teigbandes und/oder Veränderung der Bandgeschwindigkeit einstellbar oder veränderbar ist.

## Claims

1. Method for measuring the mass distribution along the width of a strip, in particular a dough strip, moved along its longitudinal direction with predetermined target width, wherein by means of at least two weighing cells (2), which are arranged at a distance to one another with respect to the width of the strip, the weight of at least one dough strand or dough piece having a width defined by the distances of the weighing cells (2) is detected,
- wherein the mass of the partial pieces of the strip is determined taking into account the distance of the weighing cells (2) to one another, the position of the weighing cells (2) along the width of the strip, the strip speed and the measured values of the weight of the partial pieces detected by the weighing cells (2), in particular, over a defined time period, **characterised in that** the weighing cells (2) and/or transport rollers (3) or sliding supports (16) connected to the weighing cells (2) extend beyond the transport plane of the strip, in particular the dough strip, wherein the strip, in particular, the dough strip, is guided in a predetermined area over the weighing cells (2) and/or transport rollers (3) and/or sliding supports (16) in such a manner that the strip, in particular, the dough strip at least partially wraps around the weighing cells (2) and/or transport rollers (3) and/or sliding supports (16) and wherein the tension within the strip, in particular, the dough strip is determined on the basis of the change of the measured values measured of the weighing cells (2).

2. Method according to claim 1, **characterised in that** the measured values of the weighing cells (2) are integrated over a defined time range and/or that on the basis of the strip speed of the strip moved over the weighing cells (2) and the masses running over the weighing cells (2) a mass flow is determined, in particular by integration of the measured values obtained by the weighing cells.

3. Method according to claim 1 or 2, **characterised in that** the respective measured mass of the partial pieces is compared with one another and with a target value and thus deviations of the weight of the partial pieces with respect to one another or with respect to a target value along the width of the strip are determined.

4. Method according to any one of claims 1 to 3, **characterised in that** on the basis of the detected measured values and/or mass of the partial pieces
- the cutting width of a cutting unit, in particular a longitudinal cutting unit, which in particular follows the weighing cells (2), is predetermined in such a manner that the endless partial strips cut by the cutting device along the longitudinal direction of the strip have the same mass per unit of length of the dough strip and/or
- the setting of the rollers, which in particular follow the weighing cells (2), to which the strip, in particular the dough strip, is fed, is changed.

5. Method according to any one of the preceding claims, **characterised in that** on the basis of the detected measured values and/or mass of the partial pieces and on the basis of the strip speed of the strip moved over the weighing cells (2) and the masses running over the weighing cells (2) a mass flow is determined, in particular by integration of the measured values obtained by the weighing cells (2) and that by changing the transport speed of the transport belts (4) or the rotational speed of the calibrating rollers, in particular, within a dough strip system, the mass flow is set or changed by compressing the strip and/or changing the strip speed downstream of the weighing device (10).

6. Weighing device (10) for measuring the mass distribution along the width of a strip, in particular, a dough strip, moved in its longitudinal direction, having a predetermined target width, in particular according to a method of claims 1 to 5, comprising at least one transport belt (4) for transporting the strip, in particular, a dough strip, along its longitudinal direction, wherein the weighing device (10) comprises at least two weighing cells (2),
- wherein the weighing cells (2) are designed in each case for determining the weight of a partial piece of a strip, in particular, of a dough strip resting on the transport belt (4), wherein the weighing cells (2) are arranged at a distance from one another with respect to the width of the strip, and
- wherein the weighing device (10) comprises an evaluation unit (7), with which the mass distribution in the strip, in particular, the dough strip, can be determined taking into consideration the measured values detected by the weighing cells (2),
**characterised in that**
the weighing cells (2) are connected to, preferably the axes of transport rollers (3) and/or to sliding supports (16) in such a manner that a strip moved by means of the transport belt (4) along its longitudinal direction is applied to the transport rollers (3) and/or sliding supports (16) and can be moved away and these are subjected to a defined part of the weight of the dough strip, and that the weighing device (10) comprises two transport belts (4a, 4b), which are arranged one behind the other in the transport direction of the strip, wherein the transport rollers (3) and/or sliding supports (16) are arranged between the two transport belts (4a, 4b) in such a manner that when a strip resting on the transport belts (4a, 4b) is transferred from one transport belt (4a) to the other transport belt (4b) the transport rollers (3) and/or sliding supports (16) are subjected to the weight of the strip, wherein each weighing cell (2) is subjected to the weight of a partial piece of the strip.

7. Weighing device (10) according to claim 6, **characterised in that** the weighing cells (2) are arranged in the transverse direction, in particular, in the end region, in relation to the running direction of the transport belt (4), in particular, aligned side by side.

8. Weighing device (10) according to any one of claims 6 and 7, **characterised in that** the weighing cells (2) are designed as a shear force weighing cell, bending bar weighing cell, shear bar weighing cell or traction force weighing cell.

9. Weighing device (10) according to any one of claims 6 to 8, **characterised in that** the weighing cells (2) are in each case connected on one side to a frame (6) of the weighing device (10), and in particular, in each case the opposite side of the weighing cell (2) to the transport rollers (3) and/or sliding supports (16) in such a manner that when a strip is transported over the transport rollers (3) and/or sliding supports (16) the weight of the partial piece of the strip is determined by the respective weighing cells (2).

10. Weighing device (10) according to any one of claims 6 to 9, **characterised in that** the weighing device (10) comprises sixteen or thirty-two or sixty-four weighing cells (2),
- wherein in particular, the weighing cells (2) are distributed uniformly along the width of the transport belt (4), in particular, over a total distance of 800 mm.

11. Dough strip system comprising a weighing device (10) according to any one of claims 6 to 10, wherein, preferably a cutting system, in particular, a longitudinal cutting unit, and/or one or several adjustable rollers are arranged downstream of the weighing device (10),
- wherein the dough strip system or the weighing device (10) comprises a control unit, with which the cutting width of the cutting unit, in particular, the longitudinal cutting unit is predetermined taking into consideration the determined weight distribution along the width of the strip in such a manner that the endless partial strips cut by the cutting device along the longitudinal direction of the strip have the same mass per unit of length of the partial strip and/or
- that the setting of the rollers can be changed by the control unit taking into consideration the determined weight distribution along the width of the strip and/or
- that at least one transport belt or at least one calibrating roller is arranged upstream and/or downstream of the weighing device (10), wherein the transport speed of the transport belt (4) or the rotational speed of the calibrating roller the mass flow can be set or changed by compressing the dough strip and/or changing the strip speed on the basis of the mass flow determined by the weighing device (10).

## Revendications

1. Procédé de mesure de la distribution de masse le long de la largeur d'une bande, en particulier d'une bande de pâte, déplacée dans sa direction longitudinale et ayant une largeur de consigne prédéterminée, le poids d'au moins un brin de pâte ou morceau de pâte ayant une largeur définie par les écarts des cellules de pesage (2) étant détecté au moyen d'au moins deux cellules de pesage (2) disposées à distance l'une de l'autre par rapport à la largeur de la bande,
- la masse des parties de la bande étant déterminée en tenant compte de l'écart des cellules de pesage (2) l'une par rapport à l'autre, de la position des cellules de pesage (2) sur la largeur de la bande, de la vitesse de la bande et des valeurs de mesure du poids des parties détectées par les cellules de pesage (2), en particulier sur une période de temps définie, **caractérisée en ce que** les cellules de pesage (2) et/ou les rouleaux de transport (3) ou les supports coulissants (16) reliés aux cellules de pesage (2) sont déplacés sur le plan de transport de la bande, en particulier d'une bande de pâte, dans lequel la bande, en particulier la bande de pâte, est guidée dans une zone prédéterminée sur les cellules de pesage (2) et/ou les rouleaux de transport (3) et/ou les supports coulissants (16) de sorte que la bande, en particulier la bande de pâte, s'enroule au moins partiellement autour des cellules de pesage (2) et/ou des rouleaux de transport (3) et/ou des supports coulissants (16), et dans lequel la tension à l'intérieur de la bande, en particulier la bande de pâte, est déterminée sur la base de la modification des valeurs de mesure des cellules de pesage (2).

2. Procédé selon la revendication 1, **caractérisé en ce que** les valeurs de mesure des cellules de pesage (2) sont intégrées sur une plage de temps définie et/ou qu'un débit massique est déterminé, en particulier par l'intégration des valeurs de mesure obtenues à partir des cellules de pesage, sur la base de la vitesse de la bande se déplaçant sur les cellules de pesage (2) et des masses circulant sur les cellules de pesage (2).

3. Procédé selon la revendication 1 ou 2, **caractérisé en ce que** les masses mesurées respectives des parties sont comparées entre elles ou avec une valeur de consigne et que les écarts de poids des parties entre elles ou par rapport à une valeur de consigne sur la largeur de la bande sont ainsi déterminés.

4. Procédé selon l'une quelconque des revendications 1 à 3, **caractérisé en ce que**, sur la base des valeurs de mesure et/ou de la masse des parties
- la largeur de coupe d'une unité de coupe, en particulier d'une unité de coupe longitudinale, suivant les cellules de pesage (2) est prédéterminée de sorte que les bandes partielles sans fin coupées par le dispositif de coupe dans le sens longitudinal de la bande aient la même masse par unité de longueur de la bande de pâte et/ou
- le réglage des rouleaux, en particulier suivant les cellules de pesage (2), auxquels la bande, en particulier la bande de pâte, est amenée, est modifié.

5. Procédé selon l'une quelconque des revendications précédentes, **caractérisé en ce que**, sur la base des valeurs de mesure et/ou de la masse des parties et sur la base de la vitesse de la bande se déplaçant sur les cellules de pesage (2) et des masses se déplaçant sur les cellules de pesage (2), un débit massique est déterminé, en particulier par intégration des valeurs de mesure obtenues à partir des cellules de pesage (2), et qu'en modifiant la vitesse de transport des bandes de transport (4) ou la vitesse de circulation des rouleaux de calibrage, en particulier au sein d'une installation de bande de pâte, le débit massique est réglé ou modifié en comprimant la bande et/ou en modifiant la vitesse de la bande après le dispositif de pesage (10).

6. Dispositif de pesage (10) pour mesurer la distribution de masse sur la largeur d'une bande, en particulier d'une bande de pâte, se déplaçant dans sa direction longitudinale, avec une largeur de consigne prédéterminée, en particulier selon un procédé des revendications 1 à 5, comprenant au moins une bande de transport (4) pour transporter la bande, en particulier la bande de pâte, le long de sa direction longitudinale, dans lequel le dispositif de pesage (10) comprend au moins deux cellules de pesage (2),
- les cellules de pesage (2) étant respectivement conçues pour déterminer le poids d'une partie d'une bande, en particulier d'une bande de pâte, reposant sur la bande de transport (4), les cellules de pesage (2) étant disposées avec une certaine distance l'une par rapport à l'autre par rapport à la largeur de la bande, et
- le dispositif de pesage (10) comprenant une unité d'évaluation (7) avec laquelle la distribution de masse dans la bande, en particulier la bande de pâte, peut être déterminée en tenant compte des valeurs de mesure détectées par les cellules de pesage (2), **caractérisé en ce que** les cellules de pesage (2) sont disposées avec, de préférence, les axes des rouleaux de transport (3) et/ou avec des supports coulissants (16) de sorte qu'une bande déplacée dans sa direction longitudinale au moyen de la bande de transport (4) est appliquée sur les rouleaux de transport (3) et/ou les supports coulissants (16) et peut en être écartée et ceux-ci sont soumis à une partie définie du poids de la bande de pâte,
- et **en ce que** le dispositif de pesage (10) comprend deux bandes de transport (4a, 4b) qui sont disposées l'une derrière l'autre dans la direction de transport de la bande, les rouleaux de transport (3) et/ou les supports coulissants (16) étant disposés entre les deux bandes de transport (4a, 4b) de sorte que lorsqu'une bande reposant sur les bandes de transport (4a, 4b) est transférée d'une bande de transport (4a) à l'autre bande de transport (4b), les rouleaux de transport (3) et/ou les supports coulissants (16) sont soumis au poids de la bande, chaque cellule de pesage (2) étant soumise au poids d'une partie de la bande.

7. Dispositif de pesage (10) selon la revendication 6, **caractérisé en ce que** les cellules de pesage (2) sont disposées dans la direction transversale, en particulier dans la zone d'extrémité, par rapport au sens de déplacement de la bande de transport (4), en particulier alignées les unes avec les autres.

8. Dispositif de pesage (10) selon l'une quelconque des revendications 6 et 7, **caractérisé en ce que** les cellules de pesage (2) sont conçues comme cellule de pesage de force de cisaillement, cellule de pesage de barre de flexion, cellule de pesage de barre de cisaillement ou cellule de pesage de force de traction.

9. Dispositif de pesage (10) selon l'une quelconque des revendications 6 à 8, **caractérisé en ce que** les cellules de pesage (2) sont reliées d'un côté à un cadre (6) du dispositif de pesage (10), et en particulier le côté opposé de la cellule de pesage (2) est relié aux rouleaux de transport (3) et/ou aux supports coulissants (16) de sorte que, lorsqu'une bande est transportée sur les rouleaux de transport (3) et/ou les supports coulissants (16), le poids d'une partie de la bande est déterminé par les cellules de pesage (2) respectives.

10. Dispositif de pesage (10) selon l'une quelconque des revendications 6 à 9, **caractérisé en ce que** le dispositif de pesage (10) comprend seize ou trente-deux ou soixante-quatre cellules de pesage (2),
- dans lequel, en particulier, les cellules de pesage (2) sont réparties uniformément sur la largeur de la bande de transport (4), en particulier sur une distance totale de 800 mm.

11. Installation de bande de pâte comprenant un dispositif de pesage (10) selon l'une quelconque des revendications 6 à 10, dans laquelle de préférence le dispositif de pesage (10) est suivi par une installation de coupe, en particulier une unité de coupe longitudinale, et/ou un ou plusieurs rouleaux réglables,
- dans laquelle l'installation de bande de pâte ou le dispositif de pesage (10) comprend une unité de commande avec laquelle la largeur de coupe de l'unité de coupe, en particulier l'unité de coupe longitudinale, est préréglée en tenant compte de la distribution déterminée du poids sur la largeur de la bande de sorte que les bandes partielles sans fin coupées par le dispositif de coupe dans la direction longitudinale de la bande ont la même masse par unité de longueur de la bande partielle et/ou
- que le réglage des rouleaux peut être modifié par l'unité de commande en tenant compte de la distribution déterminée du poids sur la largeur de la bande et/ou
- que le dispositif de pesage (10) est précédé et/ou suivi par au moins une bande de transport ou au moins un rouleau de calibrage, la vitesse de transport de la bande de transport (4) ou la vitesse de rotation du rouleau de calibrage pouvant être réglée ou modifiée au moyen du débit massique déterminé par le dispositif de pesage (10) en comprimant la bande de pâte et/ou en modifiant la vitesse de la bande.
